# EUROPEAN PATENT SPECIFICATION

(11) **EP 1 682 448 B1**
(45) Date of publication and mention of the grant of the patent: **26.06.2013**
(21) Application number: 04800943.5
(22) Date of filing: 10.11.2004
(51) Int. Cl.: C01G 23/053, C09C 1/36

(54) **PROCESS TO MAKE RUTILE PIGMENT FROM AQUEOUS TITANIUM SOLUTIONS**
PROZESS ZUR HERSTELLUNG EINES RUTILPIGMENTS AUS WÄSSRIGEN TITANLÖSUNGEN
PROCEDE DE FABRICATION DE PIGMENT RUTILE A PARTIR DE SOLUTIONS DE TITANE AQUEUSES

(30) Priority: 13.11.2003 US 712768
(43) Date of publication of application: 26.07.2006
(73) Proprietor: Altair Nanomaterials Inc., Reno, NV 89502 (US)
(72) Inventor: PROCHAZKA, Jan, Reno, NV 89503 (US); SPITLER, Timothy, Malcome, Fernley, NV 89408 (US); SABACKY, Bruce, J., Reno, NV 89511 (US)
(74) Representative: Chaillot, Geneviève
(86) International application number: PCT/US2004/037421
(87) International publication number: WO 2005/049496

(56) References cited:
- WO-A-01/00530
- KOELSCH M ET AL: "Comparison of optical and electrochemical properties of anatase and brookite TiO2 synthesized by the sol-gel method" PREPARATION AND CHARACTERIZATION, ELSEVIER SEQUOIA, NL, vol. 403-404, 1 February 2002 (2002-02-01), pages 312-319, XP004430375 ISSN: 0040-6090

## Description

The present invention relates to an economical process for making TiO₂ rutile pigment from aqueous titanium feed stocks. The process uses chemical, physical, and thermal control to create unstable intermediates to significantly lower the temperature of rutile crystal formation. The process provides good control over the rutile crystal quality, size, and particle size distribution. The byproducts can be recycled in this process.

### BACKGROUND

Two TiO₂ pigment manufacturing processes dominate the pigment industry. The sulfate process, invented in the first part of the twentieth century, was the first to provide a TiO₂ with high hiding power. The sulfate process uses hydrolysis of a titanyl sulfate solution,by boiling and dilution, followed by high-temperature calcination. Depending on the temperature of the calcination, rutile (over 900°C) or anatase (under 900°C) crystal particles are produced.

The chloride process, introduced by DuPont in the nineteen fifties, provides a rutile pigment. The chloride process uses chlorination of a titanium ore or an intermediate product to form TiCl₄ followed by oxidation of the TiCl₄ at about 1400°C to form pure TiO₂ suitable for pigment applications.

Other methods of production have been proposed, but none provides an economical process with good control of particle size and particle-size distribution. One process is disclosed in EP 186,370, which describes a method to make titanium dioxide pigment from titanium oxychloride by dilution hydrolysis, followed by calcination of the hydrolyzed product. This process is a high-energy consumer and does not allow good particle size control.

Recently, a process has been developer that is able to economically produce TiO₂ pigment particles. The process is described in U.S. patents 6,375,923 and 6,548,039. The patents include methods to produce crystal particles of TiO₂ by calcination at relatively high temperature.

In contrast to the existing technologies to make rutile pigment, the present invention is based on the physical effect of certain salts to promote the formation of unstable TiO₂ crystal intermediates, without chemically reacting to a significant extent with TiO₂. Because of the presence of the salts, unstable crystal configurations of TiO₂, such as brookite, can form and be converted into the rutile TiO₂ phase at much lower temperatures than the temperatures required in the existing processes. Chemical control agents can also be added for better control of particle size and particle size distribution.

### SUMMARY

The present invention provides a method of making rutile TiO₂ by preparing an amorphous thin-film intermediate from a feed solution. The feed solution is desirably titanium oxychloride or another aqueous solution of titanium tetrachloride. This feed solution may also contain a chemically and thermally stable salt. The feed solution is evaporated and hydrolyzed, preferably in a spray drier to produce an amorphous intermediate, which comprises hollow spheres or parts of spheres. By amorphous intermediate is meant a mixture of compounds that contain less than 10% of a crystallized phase, as determined by X-Ray diffraction. These compounds do not form an organized crystal structure and all elements are homogeneously and randomly distributed in the thin film. The salt is homogeneously distributed through the intermediate. The intermediate is believed to be an inorganic polymer consisting of the elements Ti, O, Cl, and H.

After the evaporation step, the intermediate is calcined at a temperature high enough to form particles of TiO₂ rutile crystals but low enough to prevent the chemical reaction of the salts with the titanium compounds. Depending on the composition, concentration, and character of the salts, the calcination generally occurs between 300°C and 800°C. The calcination time is typically very short because the rutile crystallization is catalyzed by the presence of the salts. The salts appear to initiate the formation of unstable crystal structures of TiO₂ such as brookite. As a result, the calcination time required to form phase-pure rutile ranges from the time required to melt the salts, typically less than one second, to a maximum of about 24 hours.

The salts are washed off with de-ionized water and a pigmentary rutile base is obtained. The base may be further dispersed to produce primary particles with a size distribution corresponding to high quality pigment. To improve control of the particle size and particle size distribution, seeding agents such as tin compounds can be used. Salts from the washing step may be recycled, conditioned in a purification step, and re-used in the process.

### DESCRIPTION OF THE DRAWINGS

FIG. 1 shows a flow sheet of one embodiment of the complete process according to the present invention.

FIG. 2 shows a flow sheet of another embodiment of the process of the present invention where the feedstock is an aqueous solution of titanium tetrachloride, or titanium oxychloride, prepared by any means.

FIG. 3 shows a phase diagram of the system NaCl-KCl-LiCl. Combinations of these salts can be used in the process of the present invention.

FIG. 4 shows a SEM image of the amorphous intermediate before calcination.

FIG. 5 presents a XRD pattern of the salted amorphous intermediate before calcination, where the salt is NaCl.

FIG. 6a is a SEM image of the salted intermediate after calcination.

FIG. 6b is a detailed SEM image of the salted intermediate after calcination, showing a local accumulation of salts.

FIG. 7 shows a possible mechanism (pathway) for low temperature rutile crystallization according to the process of the present invention.

FIG. 8 shows by means of a series of scanning electron micrographs, the transformation of the amorphous intermediate into phase-pure rutile crystals.

FIGs. 9, 9a, and 9b show the same rutile crystal phase development as in FIG. 8, by means of XRD patterns.

FIG: 10A is an XRD pattern of the amorphous intermediate after flash calcination at 625°C for 60 seconds. It shows that the conversion into rutile was very fast. Only traces of anatase phase are present.

FIG. 10B is an SEM image of the same material, showing a uniform structure of well-developed rutile crystals of pigmentary size. FIG. 10C is an SEM image of flash calcined amorphous intermediate, showing a detail of aggregates of rutile crystals and traces of an anatase phase.FIGs. 1 1 a-11 d show SEM images of a variety of shapes of the unstable brookite crystal phase, formed in the early stages of calcination. Brookite forms complex elongated orthorhombic crystals. The crystals have a flat, tabular, structure, similar to mica. Brookite can also form pseudo-hexagonal crystals.

FIG. 12 is an SEM image showing interrupted conversion of the unstable brookite crystal phase into rutile as it appears in the early stages of the calcination.

FIG. 13 shows an SEM image of the calcined pigment base produced in this process, after the salts were washed off and before the milling step.

FIG. 14 is an SEM image showing a detail of the calcined pigment base product after calcination and washing.

FIG. 15 presents an XRD pattern of the intermediate calcined at 550°C, after the salts were washed off. The XRD match indicates phase pure rutile, with no other crystal phases or salts present in this material.

FIG. 16 shows a milling profile of the material corresponding to FIG. 15.

FIG. 17 shows an SEM image of the material corresponding to FIG. 16 after milling.

FIG. 18 shows an SEM picture of a rutile pigment base made by the process described in FIG. 1.

FIG. 19 shows an SEM image of rutile with a particle size in the nano-range made according to the process of the present invention. The primary particle size is approximately between 40 nm and 100 nm.

### DESCRIPTION

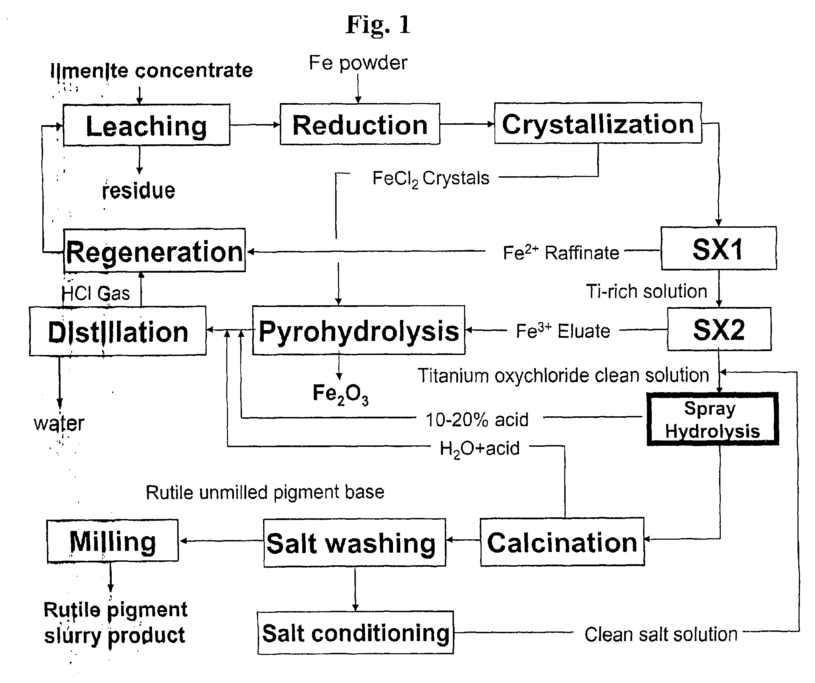

Referring now to FIG. 1, the process of the present invention comprises the following general steps: (1) preparation of an aqueous titanium compound feed solution, (2) treatment of the solution of step 1 with soluble catalyzing salts, (3) treatment of the solution of step 2 with optional seeding and chemical control agents, (4) evaporation (desirably by spray drying) of the solution of step 3 to produce an intermediate powder consisting of amorphous titanium compounds and homogeneously distributed salts, (5) calcination of the powder of step 4 to form crystalline rutile while leaving the catalyzing salts unreacted with any titanium compounds, (6) washing of the product of calcination to separate the salts added in step 2 from the crystalline rutile, (7) conditioning of the salt solution recovered in the washing step for return to the process at step 2, and (8) dispersion of the crystalline rutile aggregates by a wet milling technique to form a slurry of rutile pigment base for further processing.

The separate steps will now be described in more detail.

### Preparation of a titanium feed solution

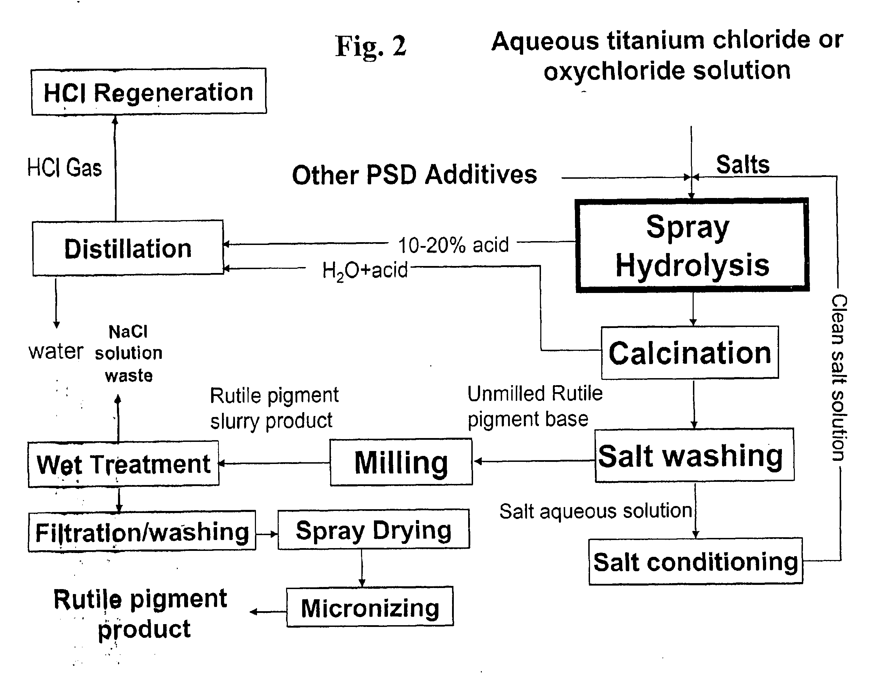

The first step of the process is the preparation of an aqueous titanium compound solution from any appropriate titanium feedstock. Desirably, the titanium compound is in solution and is not a suspension of particles. The feed solution may be prepared by any means, such as that described in U.S. Pat. No. 6,375,923 . In this regard, a titanium oxychloride feed solution is produced from an ilmenite ore concentrate feedstock. The feed solution may also be prepared as described in U.S. Pat. No. 6,548,039 . In those patents, anhydrous TiCl₄ may be used as feedstock. Alternatively, a solution of titanium oxychloride and similar compounds from any other source can be used as shown in FIG. 2. The titanium compound is an aqueous titanium compound solution. Desirably, the titanium compound is an aqueous titanium chloride solution.

### Addition of catalyzing salt

A quantity of a catalyzing salt may be completely dissolved in the titanium compound solution to form a salted feed solution. The catalyzing salt can be a single salt or a combination of salts. The catalyzing salt can be added at any suitable time prior to evaporation. For example, the catalyzing salt can be introduced into the process during the solvent extraction step. The catalyzing salt serves to promote nascent and unstable crystalline forms of TiO₂, such as brookite, which can then readily convert, at low calcination temperatures, to phase-stable crystals of pigmentary rutile.

The catalyzing salt useful in the present invention is soluble in the aqueous titanium chloride solution. It remains chemically stable and does not react with titanium compounds in the temperature range used in the present process, generally 300-800°C. In one embodiment, the catalyzing salt has a melting point of less than 800°C. The catalyzing salt added to the feed solution desirably has a melting point below that of the selected calcination temperature. It is believed, that besides their catalytic effect, the salts may also function as fusing, mass transfer, and spacing agents. These effects are particularly important when the salts are in the molten state.

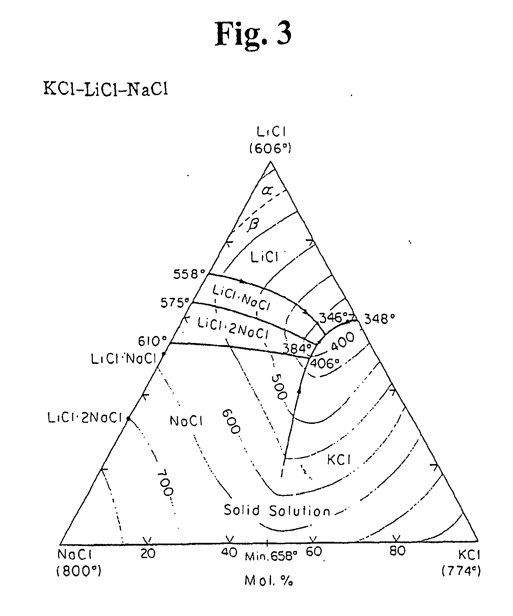

The catalyzing salt that can be used in the present invention includes pure compounds of NaCl, KCl, LiCl or any mixture of these salts or other pure chloride salts. The phase diagram in FIG. 3 shows melting points of NaCl, KCl, LiCl and their mixtures, which can be used in the present invention. Salts that are useful in the present process can be added directly as chloride salts. Alternatively, the cations can be added as other compounds, such as carbonates and hydroxides, reacting with an excess of HCl in the feed solution. These unstable compounds will be converted to chemically stable chlorides.

The quantity of catalyzing salt to be added and dissolved in the feed solution may be from about 3% by weight of the equivalent amount of titanium dioxide contained in the feed solution up to the amount corresponding to the saturation point of the salt in the feed solution. Desirably, the catalyzing salt is present in an amount from about 10% to about 50% by weight and desirably from about 15% to about. 30%, and more desirably from about 20% to about 25% by weight of the amount of the equivalent amount of TiO₂ contained in the feed solution.

By providing a molten phase at the lowest possible temperature for a mixture of the three salts, the eutectic composition of the NaCl, KCI, and NaCl is of particular use in the present invention. The eutectic corresponds to about 54 mol% LiCl, 44 mol% KCl and 10 mol% NaCl and has a melting point of 346 °C. The eutectic compositions for the binary systems LiCl-KCI (melting point of about 348 °C) and the system LiCl-NaCl (melting point about 558 °C) also provide low melting mixtures that do not require the addition of 3 different salts and are also of use in the process of the present invention.

### Optional chemical treatment and addition of seeding agents

For control of particle size and particle size distribution in the final product, chemical control and seeding agents can be added to the feed solution in addition to the catalyzing salt. These chemical control and seeding agents are incorporated in the resulting pigment material by the evaporation and calcination processes and cannot be recovered for recycle. Suitable examples of chemical control and seeding agents Include, but are not limited to tin compounds in the stannous or stannic form (Sn²⁺ or Sn⁴⁺).

### Evaporation to form a thin film salted amorphous intermediate

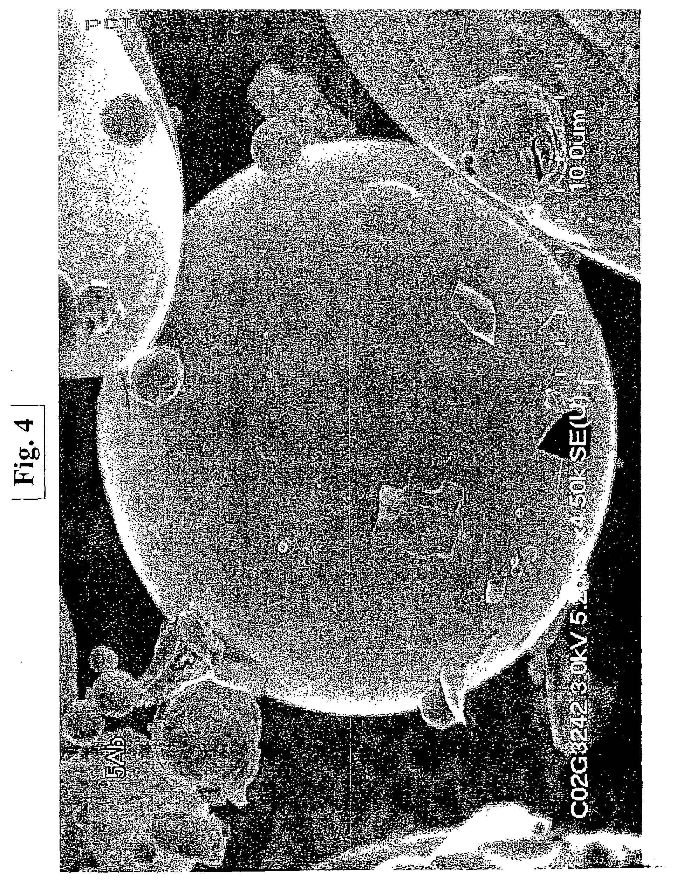

The salted feed solution (which may or may not contain chemical control and seeding agents) is evaporated to form an intermediate powder consisting of amorphous titanium compounds and a homogeneously distributed salt as shown in FIG. 4. Desirably, the evaporation is conducted in a spray drier. Spray drying produces thin-shelled or "thin film" hollow sphere or parts of spheres as shown in FIG. 4. In other words, evaporation by spray drying provides an amorphous salted intermediate.

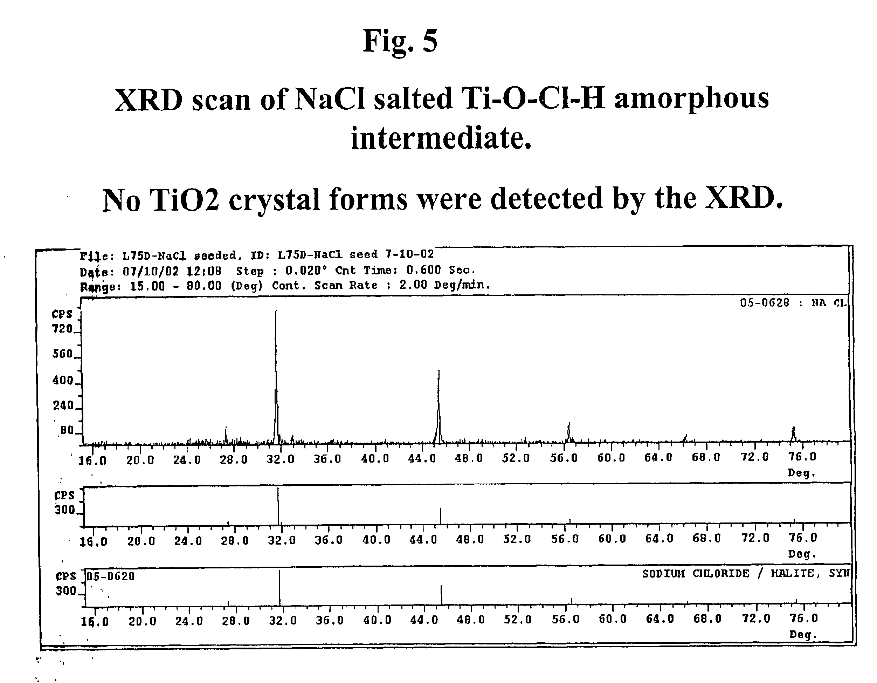

One process for making the titanium amorphous intermediate is by spray hydrolysis, as described in detail in U.S. Pat. Nos. 6,375,923, 6,440,383 and 6,548,039. A typical X-ray diffraction (XRD) pattern of a NaCl-salted amorphous intermediate is shown in FIG. 5. Sodium chloride was added in excess, compared to the capacity of the amorphous intermediate to homogeneously absorb the catalyzing salt in the substructure of the titanium amorphous compound. The XRD pattern shows the presence of NaCl crystals, formed on the surface of the amorphous intermediate.

HCl acid gases originating from this step are desirably recycled as shown in FIGs. 1 and 2.

### Calcination

The salted amorphous intermediate powder is then calcined in a temperature range where pigmentary rutile particles form but no significant chemical reaction of the catalyzing salts with titanium compounds occurs. A chemical reaction is considered significant when the product of the reaction is detectable by x-ray diffraction, which generally indicates that more than 0.5 wt% of the product is present.

Gases released during calcination (mostly H₂O and HCl) are desirably recycled as shown in FIGs. 1 and 2.

Generally, calcination temperatures range from about 300°C to about 800°C. At calcination temperatures less than 300°C, rutile crystals are mixed with other TiO₂ crystal phases. Above 800°C, the rutile crystals grow larger than pigmentary size, and, in some cases, the added catalyzing salts significantly react with TiO₂. Desirably, the calcining occurs at a temperature less than 800°C, desirably less than 700°C, more desirably less than 600°C, even more desirably less than 500°C, and particularly desirable at less than 450°C. The temperature range used for calcination in the present invention is significantly lower than the temperature used in the calcination step of the existing sulfate or chloride processes, and we have defined the present invention as a low-temperature process.

The calcination time is from the period of time to melt the catalyzing salt to about 24 hours. Desirably, the calcination time is less than about two hours, more desirably less than about 30 minutes, and even more desirably less than about one minute.

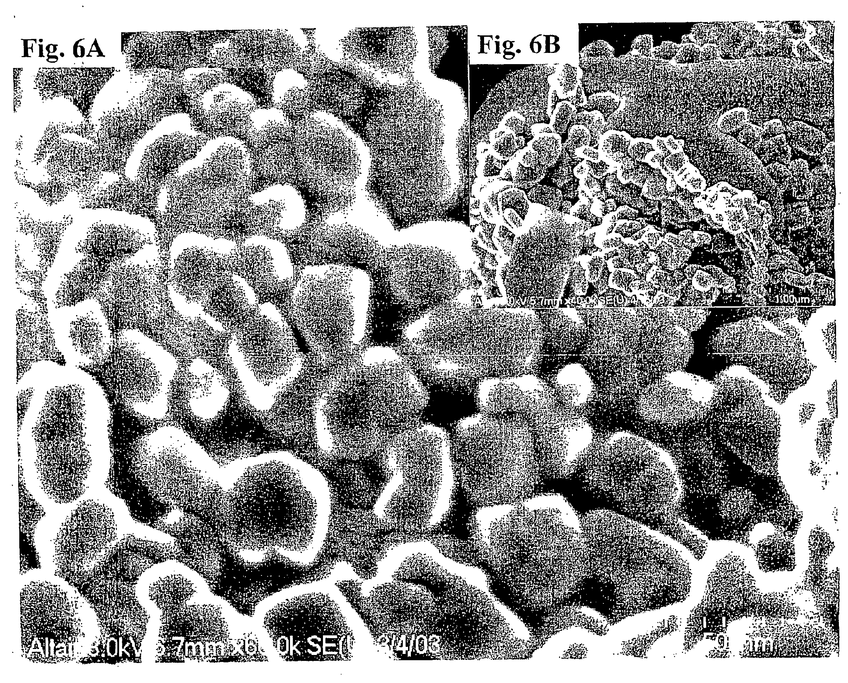

The transformation of the salted amorphous intermediate that occurs as a result of calcination is clearly shown by comparing FIGs. 4, 6a, and 6b. FIG. 4 shows the salted amorphous intermediate. In FIG. 6a, the scanning electron micrograph (SEM) shows that the calcination process has reorganized the amorphous thin film of the intermediate to an open network of well-developed rutile crystals. FIG. 6b shows where a higher concentration of catalyzing salts has fused together at one spot, after the rutile structure was formed.

In other words, after calcination, the product comprises crystallites bound in a structure of hollow spheres or parts of spheres having an effective diameter from about 0.1 µm to about 100 µm. The term "effective diameter" when used in connection with parts of spheres means that if the arc forming the parts of the sphere were to be continued, a sphere would be formed to define a diameter. The defined diameter is the effective diameter. The rutile crystallites have a particle size from about 10 nm, to about 1000 nm, including from about 50 nm to about 500 nm, and further including from about 100 nm to about 300 nm. With precise control of the operating conditions, crystallites of about 10 nm to about 100 nm can be produced. Crystallites in this size range are considered to be nano-sized TiO₂ particles.

It is expected that in the early stages of calcination, the catalyzing salts function to force the amorphous titanium compounds to adopt unstable crystalline forms of TiO₂, such as brookite. It is postulated that a mixture of these unstable crystals, consisting mostly of brookite, typically less than 100 nm in size, and a fraction of ultra small anatase, is readily converted into the rutile phase at a significantly lower temperature than the temperature at which TiO₂ anatase crystals are known to convert into rutile in the absence of salts.

Without being bound by any particular theory, it is believed that the catalyzing salts most likely improve mass transfer, provide spacing required for rutile growth to the right particle size in an open network macrostructure, and create ideal conditions for wetting and fusing in the crystal growth process, especially after they melt.

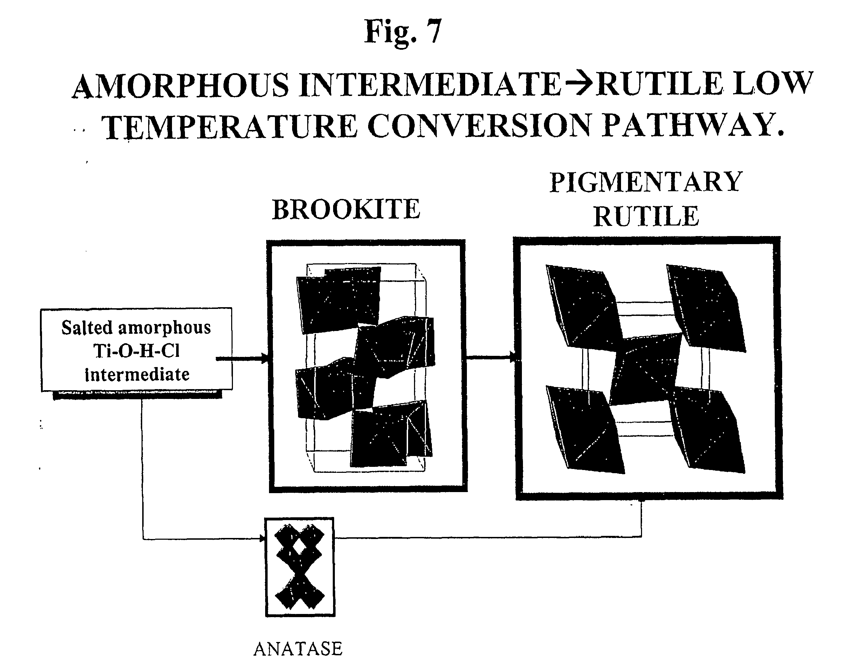

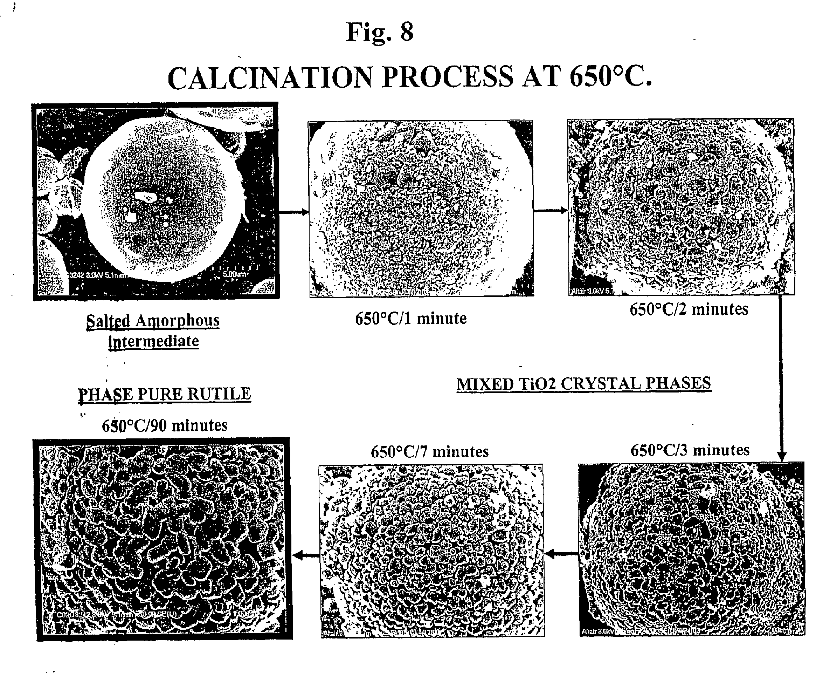

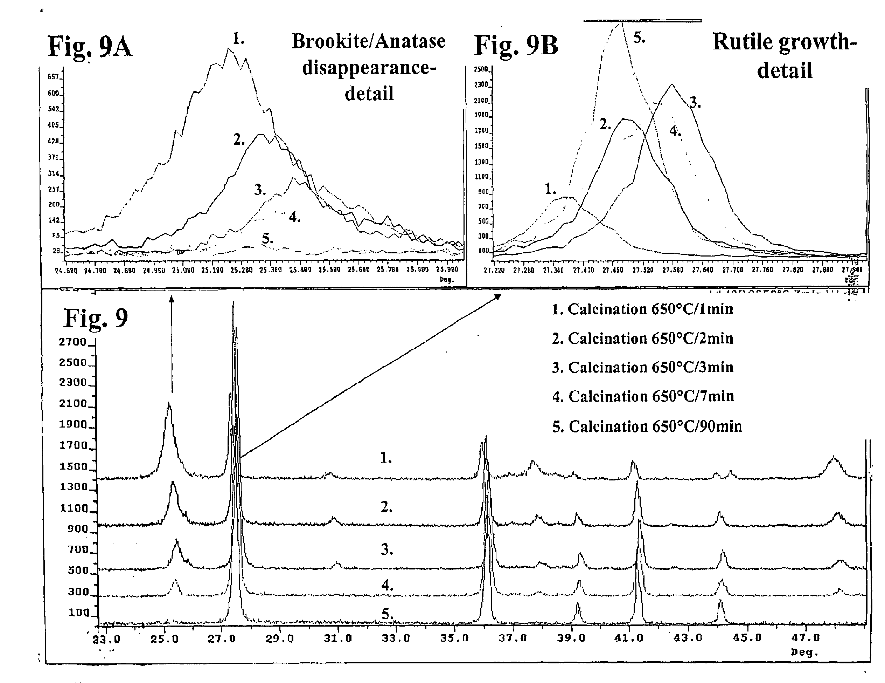

The proposed pathway for the conversion process during the calcination step is shown in FIG. 7. FIGs. 8 and 9 present, through SEM and XRD respectively, the transformation process from amorphous intermediate into rutile at 650°C. According to software provided by the International Centre for Diffraction Data (ICDD), the first XRD peaks of anatase and brookite overlap at a diffraction angle 2θ of about 25.5 degrees. The first rutile peak appears at about 27.4 degrees. Brookite shows a second peak at about 31 degrees. On this basis, the XRD pattern in FIG. 9 shows the rapid appearance of brookite and its fast conversion into thermodynamically stable rutile in the presence of small amounts of ultra small anatase during the transition.

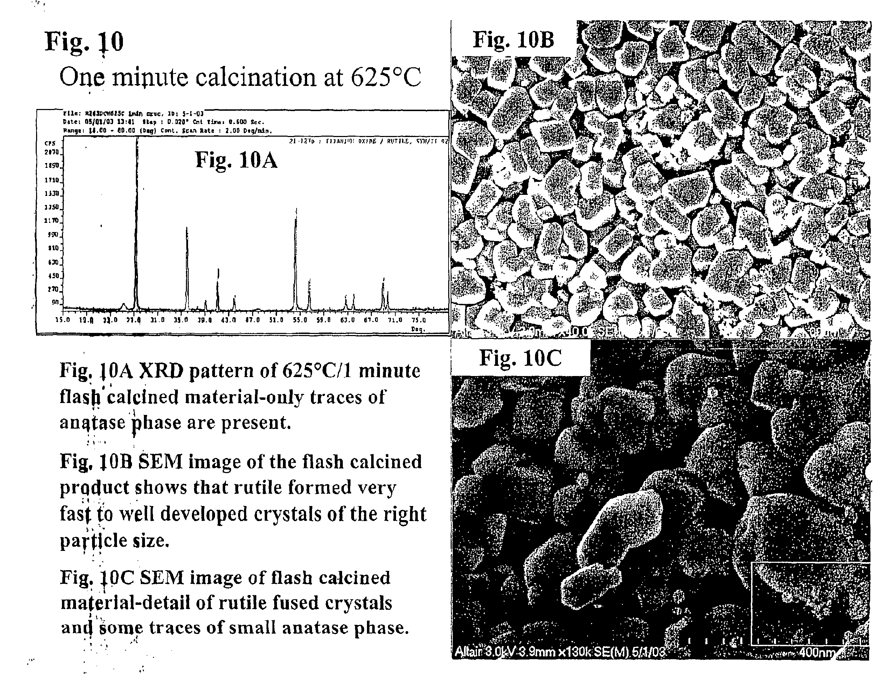

Good heat transfer is desirable during the calcination step of this invention. FIGs. 10a, 10b, and 10c describe the same rapid transition of the intermediate to rutile at 625°C in one minute when good heat transfer was provided by calcining the intermediate in a thin layer.

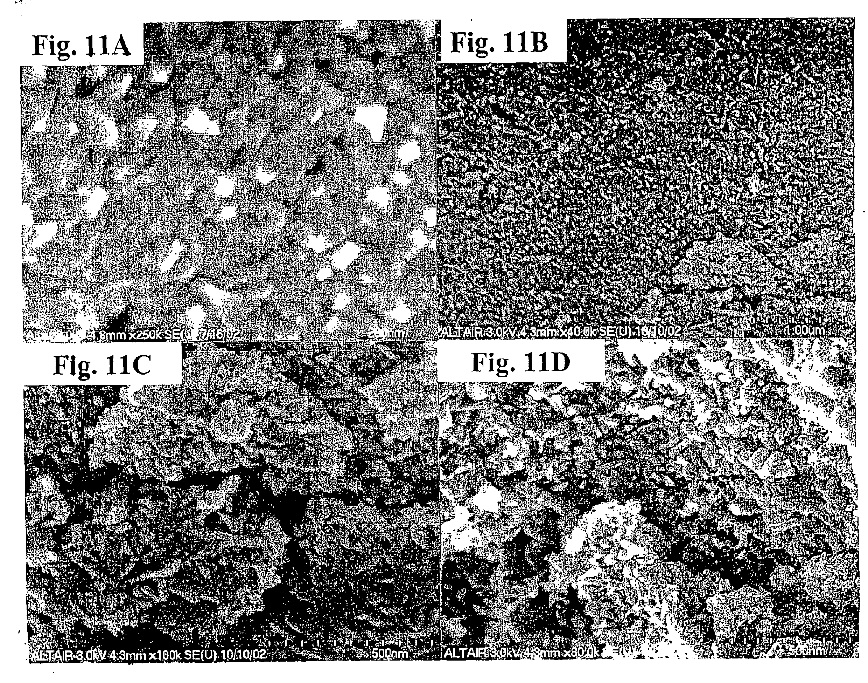

Different forms of brookite crystals are shown in FIGs. 11a-11d. It is thought that if the calcination process were terminated during the early stages, than TiO₂ in the brookite form could be manufactured.

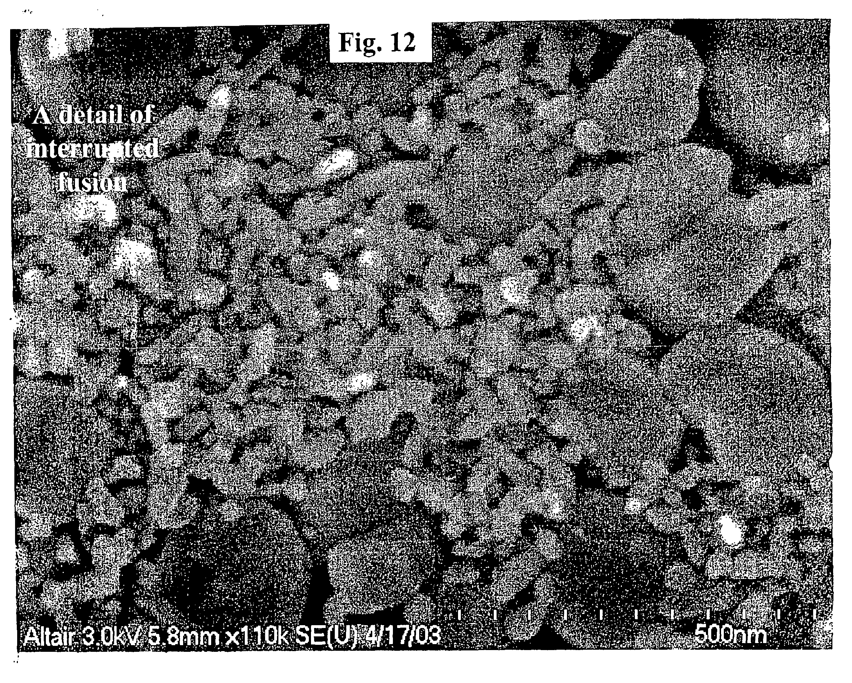

FIG. 12 shows a mixture of fully formed rutile as well as small brookite crystals. It corresponds to a test where the transformation was interrupted by removing the sample from the furnace.

### Washing

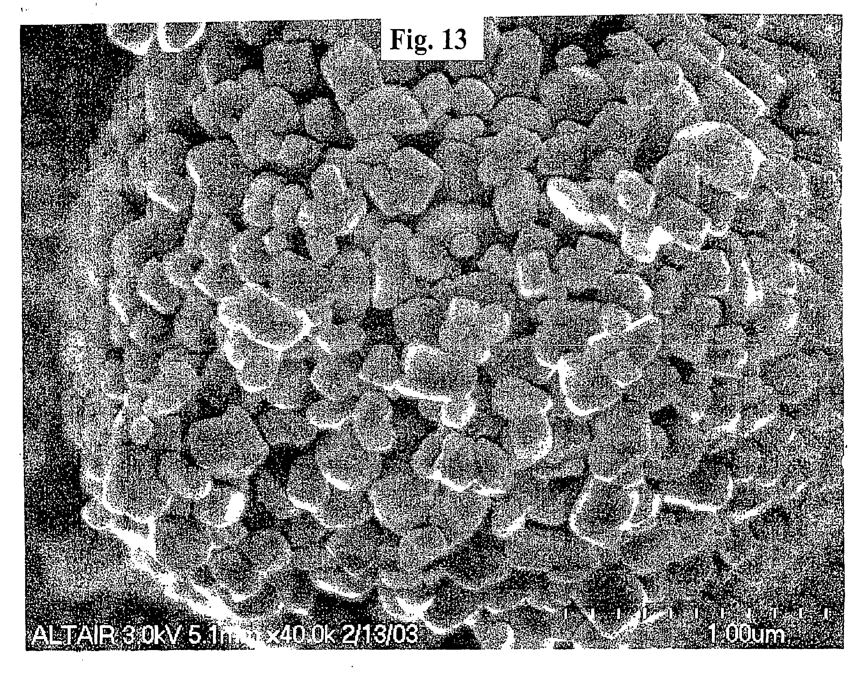

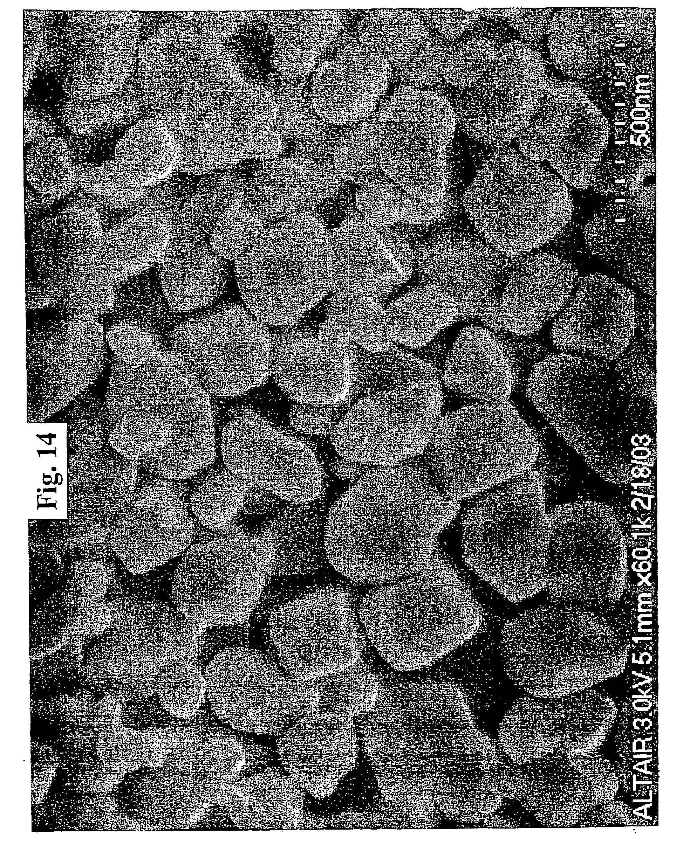

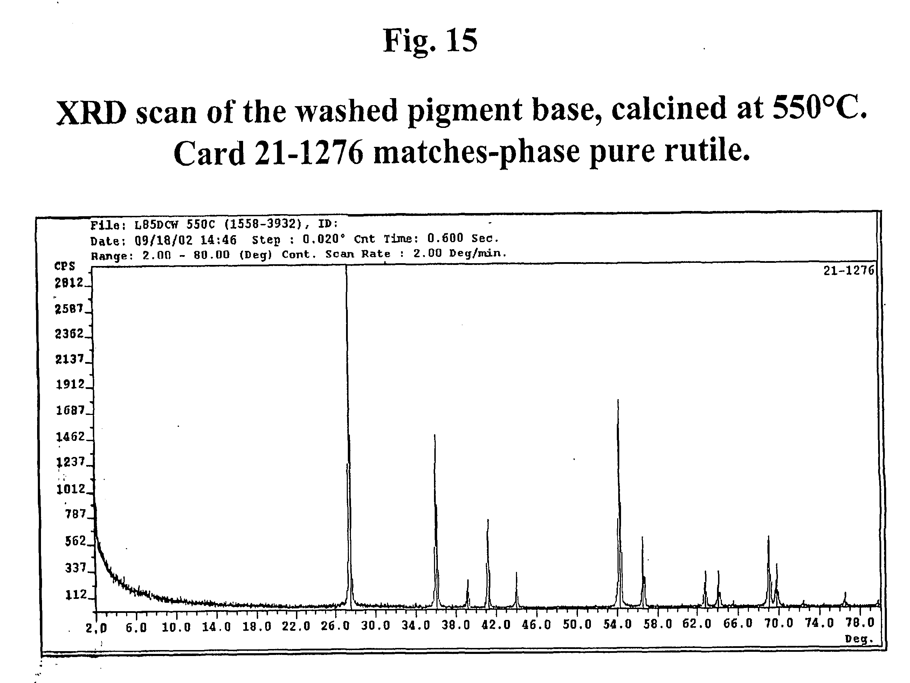

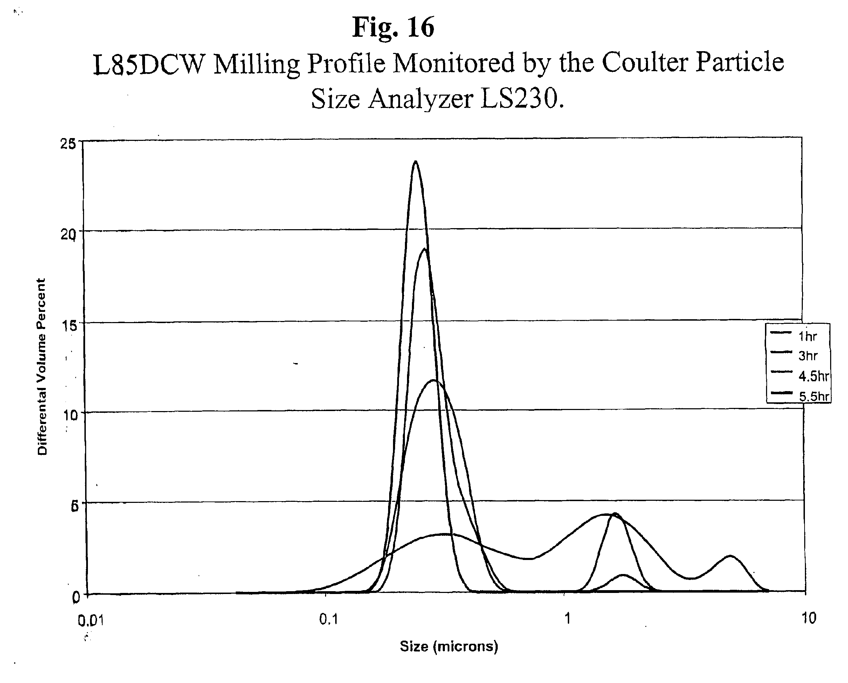

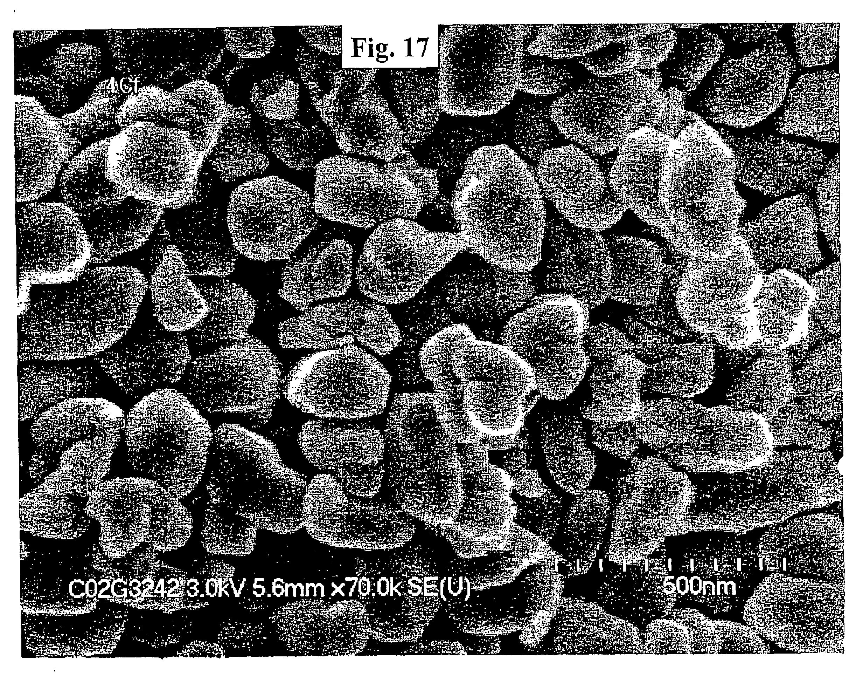

The calcined material is washed in de-ionized water to separate the aggregates of rutile pigment base (FIGs. 13 and 14) from the salts. An XRD of the rutile pigment base is shown in FIG. 15. Rutile originating from this process is usually phase pure and may be further processed in a milling step. FIG. 16 shows the particle-size distribution as a function of milling time for the sample of calcined base material shown in FIG. 15 as it is milled into a desired product. FIG 17 shows a scanning electron micrograph of the material corresponding to FIGs. 15 and 16.

### Conditioning of salts

Following recovery in the washing step, the salt solution is filtered to remove particulates, purified, if necessary, through an ion exchange or other appropriate purification step to remove trace contaminants, and concentrated, if necessary, before return to the process. The recycling of the salt solution is shown in FIGs. 1 and 2.

### Dispersion

The rutile pigment base recovered from the washing step is in the form of aggregates of primary rutile crystals. These aggregates are broken apart or dispersed in a wet milling step, producing a slurry of rutile pigment base for further treatments such as silica and/or alumina coating. The aggregated structure can also be dispersed by steam micronizing instead of wet milling.

### EXAMPLES

The following examples are meant to illustrate, but not limit, the present invention.

### EXAMPLE 1

A synthetic titanium oxychloride solution containing 110g Ti/L was treated with a NaCl-KCl-LiCl eutectic composition. FIG. 3 shows that the melting point of this salt composition is about 346°C. The total amount of the eutectic catalyzing salt composition added was 20 wt % of the amount of Ti in solution. This amount corresponds to 12 wt % of the equivalent amount of TiO₂, i.e. the TiO₂ that will be formed from the solution in the process of the present invention. The solution was evaporated in a spray drier at 250°C, producing a salted titanium inorganic amorphous intermediate (FIG. 4), which was further calcined at 625°C for 90 minutes. Phase pure rutile pigmentary particles with a specific surface area of 6 m²/g were obtained after calcination and before milling.

### EXAMPLE 2

A synthetic titanium oxychloride solution containing 100 g Ti/L was treated with a NaCl-KCl-LiCl eutectic composition. The amount of the catalyzing salt composition added was 25 wt % of the equivalent amount of TiO₂ as defined in Example 1. An amount of tin equal to 0.197 wt % of the amount of Ti present, introduced as tin tetrachloride, was also dissolved in the feed solution for better control of the particle size distribution. This amount of tin is equivalent to an addition of 0.15 wt % of SnO₂ to the final TiO₂ product that is obtained in the present process. The solution was evaporated by spray drying at 250°C, producing a salted intermediate, which was further calcined at 625°C for 90 minutes. Phase-pure rutile pigmentary particles with a specific surface area 7 m²/g were obtained after calcination. A scanning electron micrograph of the material before milling is shown in FIG. 14. The dry brightness of the unmilled material, determined by spectrophotometry, was 96.4. The average particle size determined by transmission electron microscopy was 140 nm after milling.

### EXAMPLE 3

A synthetic titanium oxychloride solution containing 110 g Ti/L was treated with a NaCl-KCl-LiCl eutectic composition. The amount of the catalyzing salt composition dissolved in the feed solution was 25 wt % of the equivalent amount of TiO₂ as defined in Example 1. The solution was evaporated in a spray drier at 250°C, producing a salted intermediate. Samples of the intermediate were calcined at 650°C for 1, 2, 3, 7, and 90 minutes. The rutile phase growth was monitored. SEM photographs found in FIG. 8 show the transition into rutile pigment particles. XRD patterns found in FIG. 9 show the same transition into rutile pigment. The transition of the amorphous intermediate into rutile pigment particles caused by the presence of salts is very fast and the transition time generally depends on the amount of heat that can be transferred during calcinations, as is shown in FIG. 10a. FIG. 10b shows that transformation of one crystal form into another can take place within one minute. No slow gradual growth of rutile particles was observed. Traces of unconverted anatase after this one-minute fusion are shown in FIG. 10c. FIG., 12 shows an example of brookite to rutile conversion interrupted before completion. In another set of experiments in crucibles, with the same salt additions, it was found that the minimum calcination times for full rutile conversion was 60 minutes at 500°C, 30 minutes at 600°C, and 15 minutes at 650°C. Generally, full rutilization can be achieved in an extremely short time. In fact, full rutilization can be achieved almost instantly after the salt package melts. A variety of calcination techniques, including airborne calcination in a heated nozzle, can be used to achieve the same results.

### EXAMPLE 4

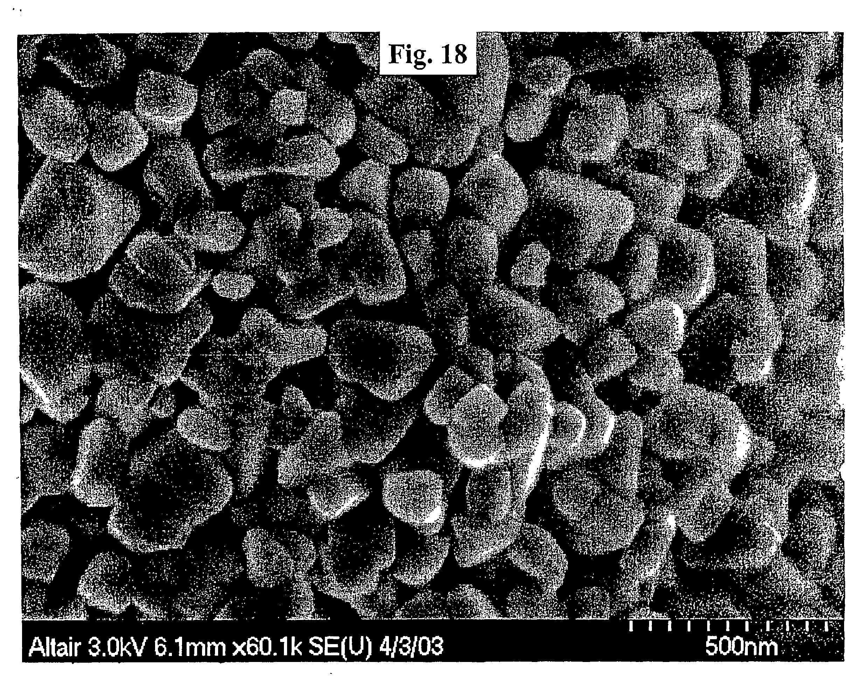

A titanium oxychloride solution containing 80 g Ti/L, prepared from ilmenite ore following the process of U.S. Pat. No. 6,375,923 (as generally depicted by FIG. 1, herein) was treated with a NaCl-KCl-LiCl eutectic composition. The amount of the catalyzing salt composition added was 25 wt % of the equivalent amount of TiO₂ in the feed solution as defined in Example 1. An amount of tin equivalent to 0.3% SnO₂ in the TiO₂ product, as defined in Example 2, was introduced as tin tetrachloride, and was dissolved in the feed solution for better control of the particle size distribution. The solution was evaporated in a spray drier at 250°C, producing a salted intermediate, which was further calcined at 625°C for 90 minutes. Phase-pure rutile pigmentary particles were obtained after calcination. FIG. 18 shows an SEM photograph of the phase-pure rutile pigmentary particles.

### EXAMPLE 5 (Reference Example)

A synthetic titanium oxychloride solution containing 45 g Ti/l was treated with a 70:30 mol% NaCl-LiCl mixture. The melting point of this NaCl-LiCl mixture is about 700°C. The amount of the catalyzing salt mixture added was 20 wt % of the equivalent amount of TiO₂, as defined in Example 1. An amount of tin equivalent to an addition of 0.3% of SnO₂ to the final TiO₂ product, as defined in Example 2, was introduced as tin tetrachloride and was dissolved in the feed solution for better control of the particle size distribution. The solution was evaporated in a spray drier at 250°C, producing a salted intermediate, which was further calcined at 630°C for 8 hours. Phase-pure rutile pigmentary particles were obtained after calcination. The specific surface area of this pigment base was 5.1 m²/g before dispersion and 7.4 m²/g after dispersion. The average particle size estimated by transmission electron microscopy was 184 nm after milling. The pigment had a slight yellow undertone. Dry brightness of this material was 95.7 before milling.

### EXAMPLE 6 (Reference Example)

A synthetic titanium oxychloride solution containing 50 g Ti/L was treated with a NaCl-LiCl eutectic composition with a melting point around 554°C. The amount of the catalyzing salt composition added was 10 wt % of the equivalent amount of TiO₂ present, as defined in Example 1. Tin chloride as a seeding agent was added to the feed solution for better control of the particle size distribution. The solution was evaporated in a spray drier at 250°C, producing a salted intermediate, which was further calcined at 550°C for 8 hours. Phase pure rutile pigment particles were obtained in the calcination. FIG. 15 shows an XRD pattern of the phase-pure rutile pigment particles. The specific surface area of these aggregates was 7 m²/g before milling. The material was dispersed after the washing step, producing a slurry of a milled pigment base, with pigmentary particle size distribution and a specific surface area of 9 m²/g. FIG. 16 shows the milling profile of this material, monitored by a Coulter LS230 Particle size analyzer. FIG. 17 shows an SEM image of the material after dispersion.

### EXAMPLE 7 (Reference Example)

A synthetic titanium oxychloride solution containing 110 g Ti/L was treated with lithium chloride. An amount of 19.9 g of Li per liter of solution was added to this solution as lithium hydroxide. This amount corresponds to a Ti:Li molar ratio in the solution of about 5:4. The solution was evaporated in a spray drier at 250°C, producing a salted intermediate, which was further calcined at 500°C for 6 hours. Rutile pigmentary particles were obtained.

### EXAMPLE 8 (Reference Example)

A synthetic titanium oxychloride solution containing 50 g Ti/L was treated with an amount of sodium chloride corresponding to 20 wt % of the equivalent amount of TiO₂, as defined in Example 1. An amount of tin tetrachloride penta-hydrate corresponding to 1.7% of the amount of Ti present in solution was added to the solution for better control of particle size and particle size distribution. The solution was evaporated in a spray drier at 250°C, producing a salted intermediate. The XRD pattern corresponding to this intermediate material is shown in FIG. 5. The salted intermediate was further calcined at 820°C for four hours. Rutile pigmentary particles were obtained in the calcination.

### EXAMPLE 9

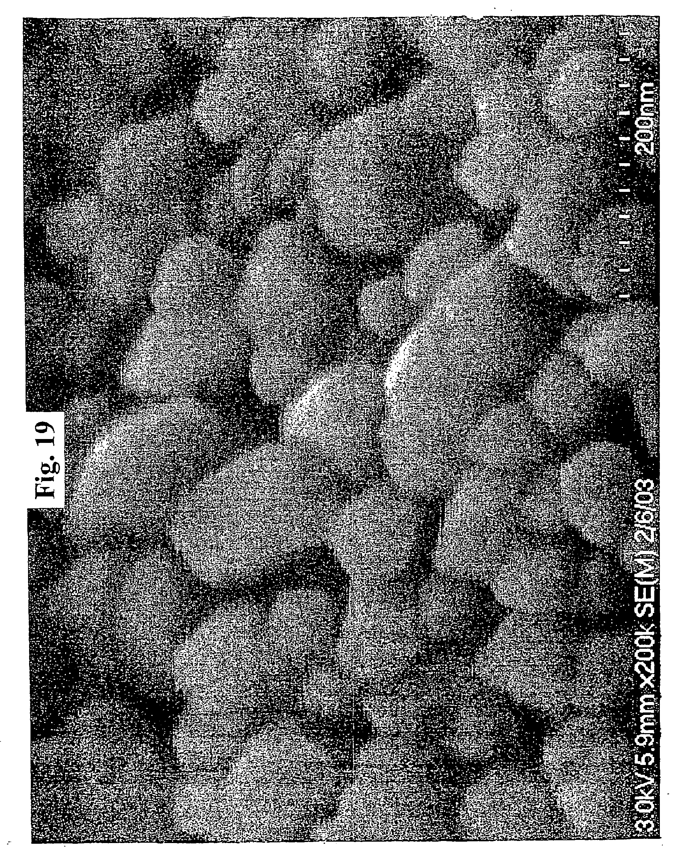

A synthetic titanium oxychloride solution containing 100 g Ti/L was treated with a NaCl-KCl-LiCl eutectic composition. The amount of the catalyzing salt composition added was 25 wt % of the equivalent amount of TiO₂ as defined in Example 1. An amount of tin equivalent to 0.3% SnO₂ in the TiO₂ product, as defined in Example 2, was introduced as tin tetrachloride, and was dissolved in the feed solution for better control of the particle size distribution. The solution was evaporated in a spray drier at 250°C, producing a salted intermediate, which was further calcined at 550°C for 90 minutes. Nano-sized particles of phase-pure rutile were obtained in the calcination. FIG. 19 shows an SEM photograph of the nano-sized particles of phase-pure rutile having primary particle size in the range from about 20 nm to about 100 nm.

By varying the amount and composition of the NaCl-KCl-LiCl mixture, the composition of the seeding agent and the calcination temperature, it is possible to methodically control the particle size of the product. Particle sizes between 150 and 350 nm can be obtained. Smaller, nano-sized (< 100 nm) particles, useful for non-pigment applications can also be formed. Larger (over 500 nm) particles form, when amounts of added salts are low, typically under 10 wt % based on the titanium dioxide content, and calcination temperature is high, typically above 700°C.

### EXAMPLE 10 (Reference Example)

A synthetic titanium oxychloride solution containing 50 g Ti/L was treated with NaCl. The amount of catalyzing salt added was 20 wt % of the equivalent of TiO₂ as defined in Example 1. The solution was evaporated in a spray drier at 250°C, producing a salted intermediate, which was further calcined at 600°C for 30 minutes. An unstable brookite crystal phase was obtained. FIG. 11a shows an SEM photograph of the brookite crystal phase, produced under these conditions, and after washing.

### EXAMPLE 11

A synthetic titanium oxychloride solution containing 100 g Ti/L was treated with a NaCl-KCl-LiCl eutectic composition. The amount of the catalyzing salt composition added was 25 wt % of the equivalent amount of TiO₂ in the feed solution as defined in Example 1. The solution was evaporated in a spray drier at 250°C, producing a salted intermediate, which was further calcined at 500°C for about a minute. Nano-sized needles (less than 100 nm) of brookite were obtained after calcination. FIGs. 11b, 11c, and 11d show different forms of brookite crystal structure formed in this calcination.

### EXAMPLE 12

The calcined product described in Example 2, was washed in DI water. The unmilled pigment base stayed on the filter, while the salt solution was separated and run at pH 7 through a column filled with resin to remove possible cross contaminants such as iron. The conditioned salt solution was further used for hydration of TiCl₄, to prepare feed for another batch of titanium oxychloride solution. Since the salt no longer contained tin chloride, tin chloride was added again to the new feed solution, as depicted in FIG. 1.

It is therefore intended that the foregoing detailed description be regarded as illustrative rather than limiting, and that it be understood that it is the following claims, including all equivalents, that are intended to define the spirit and scope of this invention.

## Claims

1. A low-temperature process for producing pigment-grade rutile titanium dioxide from an aqueous solution comprising the following sequential steps:
a. preparing an aqueous feed solution comprising a titanium compound;
b. adding an effective amount of a catalyzing salt to the solution;
c. optionally adding a chemical control agent to the solution;
d. evaporating the solution to produce a dry amorphous intermediate that includes a mixture of titanium compounds; and
e. calcining the intermediate at a temperature less than 500° C to form TiO₂ rutile pigment base.

2. A low-temperature process for producing pigment-grade rutile titanium dioxide from an aqueous solution comprising the following sequential steps:
a. preparing an aqueous feed solution comprising a titanium compound;
b. adding an effective amount of a catalyzing salt to the solution wherein the catalyzing salt is selected from (i) a eutectic mixture of NaCl, KCl, and LiCl, (ii) a eutectic mixture of KCl and LiCl, or (iii) a eutectic mixture of NaCl and LiCl;
c. optionally adding a chemical control agent to the solution;
d. evaporating the solution to produce a dry amorphous intermediate that includes a mixture of titanium compounds; and
e. calcining the intermediate to form TiO₂ rutile pigment base, wherein the catalyzing salt has a melting point temperature less than the calcining temperature.

3. The process of claim 1 or 2 further comprising whashing the salt from the calcined TiO₂ rutile pigment base.

4. The process of claim 1 or 2 further comprising milling and dispersing the TiO₂ rutile pigment.

5. The process of claim 1 or 2 wherein the titanium compound is selected from the group of titanium choride, titanium oxychloride, and mixtures thereof.

6. The process of claim 1 or 2 wherein the titanium compound is titanium oxychloride.

7. The process of claim 1 wherein the catalyzing salt is a salt of an alkali metal.

8. The process of claim 1 wherein the catalyzing salt is selected from the group consisting of chloride salts.

9. The process of claim 7 wherein the chloride salts are selected from the group consisting of NaCl, KCl, LiCl and mixtures thereof.

10. The process of claim 7 wherein the chloride salts comprise a eutectic mixture of NaCl, KCl, and LiCl.

11. The process of claim 7 wherein the chloride salts comprise a eutectic mixture of LiCl and KCl.

12. The process of claim 7 wherein the chloride salts comprise a eutectic mixture of LiCl and NaCl.

13. The process of claim 1 or 2 wherein the catalyzing salt is present in the feed solution in an amount from about 3 weight % of the equivalent amount of TiO₂ present in the feed solution and the amount corresponding to the saturation point of the catalyzing salt in the feed solution.

14. The process of claim 1 or 2 wherein the catalyzing salt present in the feed solution is from about 10 weight % and about 50 weight % of the equivalent amount of TiO₂ present in the feed solution.

15. The process of claim 1 or 2 wherein the amount of the catalyzing salt is between about 15 weight % and about 30 weight % of the equivalent amount of TiO₂ present in the feed solution.

16. The process of claim 1 or 2 wherein the catalyzing salt does not significantly chemically react with titanium oxide through the process.

17. The process of claim 1 or 2 wherein the catalyzing salt does not significantly change chemical composition.

18. The process of claim 1 or 2 wherein the catalyzing salt is recycled.

19. The process of claim 1 or 2, wherein the TiO₂ rutile pigment base comprises an open network of rutile crystals.

20. The process of claim 2 wherein the catalyzing salt has a melting point of less than 800°C.

21. The process of claim 2 wherein the calcining is conducted at a temperature less than 800°C.

22. The process of claim 2 wherein the calcining is conducted at a temperature less than 700°C.

23. The process of claim 2 wherein the calcining is conducted at a temperature less than 600°C.

24. The process of claim 2 wherein the calcining is conducted at a temperature less than 500°C.

25. The process of claim 2 wherein the calcining is conducted at a temperature less than 400°C.

26. The process of claim 1 or 2 wherein the calcination time is less than about two hours.

27. The process of claim 1 or 2 wherein the calcination time is less than about 30 minutes.

28. The process of claim 1 or 2 wherein the calcination time for is less than about one minute.

29. The process of claim 1 or 2 wherein the chemical control agent is added before evaporating.

30. The process of claim 29 wherein the chemical control agent is a water-soluble salt of tin.

31. The process of claim 29 wherein the chemical control agent is tin chloride.

32. The process of claim 1 or 2 wherein the evaporating is conducted in a spray drier.

33. The process of claim 1 or 2 wherein the evaporation temperature is between about 100°C and about 300°C.

34. The process of claim 1 or 2 wherein the amorphous intermediate comprises a homogeneous mixture of titanium, oxygen, chlorine, and hydrogen compounds, with a homogeneous distribution of salts through the titanium intermediate.

35. The process of claim 34 wherein the product after calcination comprises TiO₂ rutile crystallites bound in a structure of hollow spheres or parts of spheres.

36. The process of claim 35 wherein the spheres have a diameter of about 0.1 to about 100 µm.

37. The process of claim 35 wherein the crystallites have a particle size between about 10 nm and 1000 nm.

38. The process of claim 35 wherein the crystallites have a particle size between about 50 nm and 500 nm.

39. The process of claim 35 wherein the crystallites forming the hollow spheres have a particle size between about 100 nm and 300 nm.

40. The process of claim 1 or 2 wherein the washing is conducted with water to provide an aqueous salt solution and the TiO₂ rutile pigment base.

41. The process of claim 40 further comprising recycling the salts in the aqueous salt solution.

42. The process of claim 41 further comprising milling the washed TiO₂ rutile pigment base produce.

43. The process of claim 1 or 2 wherein a thermodynamically unstable brookite phase is formed as an intermediate during the early stages of calcination.

## Patentansprüche

1. Niedrigtemperaturverfahren zur Herstellung von Rutil-Titandioxid mit Pigmentgüte aus einer wässrigen Lösung, umfassend die folgenden aufeinanderfolgenden Schritte:
a. Herstellen einer wäßrigen Versorgungslösung, die eine Titanverbindung umfasst;
b. Zugeben einer wirksamen Menge eines katalysierenden Salzes zu der Lösung;
c. gegebenenfalls Zugabe eines chemischen Steuerungsmittels zu der Lösung;
d. Verdampfen der Lösung, um ein trockenes amorphen Zwischenprodukt zu erzeugen, das eine Mischung von Titanverbindungen enthält; und
e. Calcinieren des Zwischenprodukts bei einer Temperatur unter 500°C, um Rutil-TiO₂ Pigment Basis zu bilden.

2. Niedrigtemperaturverfahren zur Herstellung von Rutil-Titandioxid mit Pigmentgüte aus einer wässrigen Lösung, umfassend die folgenden aufeinanderfolgenden Schritte:
a. Herstellen einer wäßrigen Versorgungslösung, die eine Titanverbindung umfasst;
b. Zugeben einer wirksamen Menge eines katalysierenden Salzes zu der Lösung, wobei das katalysierende Salz aus
(i) einem eutektischen Gemisch aus NaCl, KCl und LiCl;
(ii) einem eutektischen Gemisch aus KCl und LiCl oder
(iii) einem eutektischen Gemisch aus NaCl und LiCl gewählt ist;
c. gegebenenfalls Zugabe eines chemischen Steuerungsmittels zu der Lösung;
d. Verdampfen der Lösung, um ein trockenes amorphen Zwischenprodukt zu erzeugen, das eine Mischung von Titan-Verbindungen enthält; und
e. Calcinieren des Zwischenprodukts, um Rutil-TiO₂ Pigment Basis zu bilden, wobei das katalysierende Salz eine Schmelzpunkttemperatur geringer als der Calcinierungstemperatur hat.

3. Verfahren nach Anspruch 1 oder 2, weiterhin umfassend das Waschen des Salzes aus der calcinierten Rutil-TiO₂ Pigment Basis.

4. Verfahren nach Anspruch 1 oder 2, weiterhin umfassend das Mahlen und Dispergieren des Rutil-TiO₂ Pigments.

5. Verfahren nach Anspruch 1 oder 2, wobei die Titanverbindung aus der Gruppe von Titanchlorid, Titanoxychlorid und Mischungen davon ausgewählt ist.

6. Verfahren nach Anspruch 1, wobei die Titanverbindung Titanoxychlorid ist.

7. Verfahren nach Anspruch 1 oder 2, wobei das katalysierende Salz ein Salz eines Alkalimetalls ist.

8. Verfahren nach Anspruch 1, wobei das katalysierende Salz aus der Gruppe bestehend aus Chloridsalzen ausgewählt ist.

9. Verfahren nach Anspruch 7, wobei die Chloridsalze aus der Gruppe bestehend aus NaCl, KCl, LiCl und Mischungen davon ausgewählt sind.

10. Verfahren nach Anspruch 7, wobei die Chloridsalze ein eutektisches Gemisch aus NaCl, KCl und LiCl umfassen.

11. Verfahren nach Anspruch 7, wobei die Chloridsalze ein eutektisches Gemisch aus LiCl und KCl umfassen.

12. Verfahren nach Anspruch 7, wobei die Chloridsalze ein eutektisches Gemisch aus LiCl und NaCl umfassen.

13. Verfahren nach Anspruch 1 oder 2, wobei das katalysierende Salz in der Versorgungslösung in einer Menge zurischen etwa 3 Ges.% der äquivalenten Menge an TiO₂ in der Versorgungslösung liegt und die Menge entsprechend dem Sättigungspunkt des katalysierenden Salzes in der Versorgungslösung.

14. Verfahren nach Anspruch 1 oder 2, wobei das katalysierende Salz in der Versorgungslösung zwischen etwa 10 Gew.% und etwa 50 Gew.% der äquivalenten Menge an TiO₂ in der Versorgungslösung ist.

15. Verfahren nach Anspruch 1 oder 2, wobei die Menge des katalysierenden Salzes zwischen etwa 15 Gew.% und etwa 30 Gew.% der äquivalenten Menge von TiO₂ in der Versorgungslösung ist.

16. Verfahren nach Anspruch 1 oder 2, wobei das katalysierende Salz nicht wesentlich chemisch mit Titanoxid durch das Verfahren reagiert.

17. Verfahren nach Anspruch 1 oder 2, wobei das katalysierende Salz nicht wesentlich chemische Zusammensetzung ändert.

18. Verfahren nach Anspruch 1 oder 2, wobei das katalysierende Salz rückgeführt wird.

19. Verfahren nach Anspruch 1 oder 2, wobei das Rutil-TiO₂ Pigment Basis einen offenen Netzwerk von Rutilkristallen umfasst.

20. Verfahren nach Anspruch 2, wobei das katalysierende Salz einen Schmelzpunkt von weniger als 800°C hat.

21. Verfahren nach Anspruch 2, wobei das Calcinieren bei einer Temperatur unter 800°C durchgeführt wird.

22. Verfahren nach Anspruch 2, wobei das Calcinieren bei einer Temperatur unter 700°C durchgeführt wird.

23. Verfahren nach Anspruch 2, wobei das Calcinieren bei einer Temperatur unter 600°C durchgeführt wird.

24. Verfahren nach Anspruch 2, wobei das Calcinieren bei einer Temperatur unter 500°C durchgeführt wird.

25. Verfahren nach Anspruch 2, wobei das Calcinieren bei einer Temperatur unter 400°C durchgeführt wird.

26. Verfahren nach Anspruch 1 oder 2, wobei die Calcinierungszeit weniger als etwa zwei Stunden ist.

27. Verfahren nach Anspruch 1 oder 2, wobei die Calcinierungszeit weniger als etwa 30 Minuten ist.

28. Verfahren nach Anspruch 1 oder 2, wobei die Calcinierungszeit weniger als etwa eine Minute ist.

29. Verfahren nach Anspruch 1 oder 2, wobei das chemische Steuerungsmittel vor Verdampfen zugegeben ist.

30. Verfahren nach Anspruch 29, wobei das chemische Steuerungsmittel ein wasserlösliches Salz von Zinn ist.

31. Verfahren nach Anspruch 29, wobei das chemische Steuerungsmittel Zinnchlorid ist.

32. Verfahren nach Anspruch 1 oder 2, wobei das Verdampfen in einem Sprühtrockner durchgeführt wird.

33. Verfahren nach Anspruch 1 oder 2, wobei die Verdampfungstemperatur zwischen etwa 100°C und etwa 300°C ist.

34. Verfahren nach Anspruch 1 oder 2, wobei das amorphe Zwischenprodukt eine homogene Mischung aus Titan-, Sauerstoff-, Chlor- und Wasserstoff-Verbindungen umfasst, mit einer homogenen Verteilung von Salzen durch den Titanzwischenprodukt.

35. Verfahren nach Anspruch 34, wobei das Produkt nach der Calcinierung Rutil-TiO₂-Kristallite in einer Struktur aus Hohlkugeln oder Teilen von Kugeln gebundenen umfasst.

36. Verfahren nach Anspruch 35, wobei die Kügeln einen Durchmesser von etwa 0,1 bis etwa 100 µm aufweisen.

37. Verfahren nach Anspruch 35, wobei die Kristallite eine Teilchengröße zwischen etwa 10 nm und 1000 nm aufweisen.

38. Verfahren nach Anspruch 35, wobei die Kristallite eine Teilchengröße zwischen etwa 50 nm und 500 nm aufweisen.

39. Verfahren nach Anspruch 35, wobei die Kristallite, die die Hohlkugeln bilden, einer Teilchengröße zwischen etwa 100 nm und 300 nm aufweisen.

40. Verfahren nach Anspruch 1 oder 2, wobei das Waschen mit Wasser durchgeführt wird, um eine wässrige Salzlösung und die Rutil-TiO₂ Pigment Basis zu erhalten.

41. Verfahren nach Anspruch 40, weiterhin umfassend die Rückführung der Salze in der wässrigen Salzlösung.

42. Verfahren nach Anspruch 41, weiterhin umfassend das Mahlen des gewaschenen Rutil-TiO₂ Pigment Basisprodukts.

43. Verfahren nach Anspruch 1 oder 2, wobei eine thermodynamisch instabile Brookit Phase als Zwischenprodukt während der frühen Stufen der Calcinierung ausgebildet wird.

## Revendications

1. Procédé à basse température de production de dioxyde de titane rutile de qualité pigmentaire à partir d'une solution aqueuse comprenant les étapes séquentielles suivantes :
a.préparer une solution aqueuse d'alimentation comprenant un composé du titane ;
b. ajouter une quantité efficace d'un sel catalyseur à la solution ;
c.facultativement ajouter un agent de contrôle chimique à la solution ;
d. faire évaporer la solution pour produire un intermédiaire amorphe sec qui comprend un mélange de composés du titane ; et
e. calciner l'intermédiaire à une température inférieure à 500°C pour former une base pigmentaire de rutile TiO₂.

2. Procédé à basse température de production de dioxyde de titane rutile de qualité pigmentaire à partir d'une solution aqueuse comprenant les étapes séquentielles suivantes :
a. préparer une solution aqueuse d'alimentation comprenant un composé du titane ;
b. ajouter une quantité efficace d'un sel catalyseur à la solution, le sel catalyseur étant choisi parmi (i) un mélange eutectique de NaCl, KCl et LiCl, (ii) un mélange eutectique de KCl et LiCl, ou (iii) un mélange eutectique de NaCl et LiCl ;
c. facultativement ajouter un agent de contrôle chimique à la solution ;
d.faire évaporer la solution pour produire un intermédiaire amorphe sec qui comprend un mélange de composés du titane ; et
e. calciner l'intermédiaire pour former une base pigmentaire de rutile TiO₂, le sel catalyseur ayant une température de point de fusion inférieure à la température de calcination.

3. Procédé selon l'une des revendications 1 ou 2, comprenant en outre le lavage du sel à partir de la base pigmentaire de rutile TiO₂ calcinée.

4. Procédé selon l'une des revendications 1 ou 2, comprenant en outre le broyage et la dispersion du pigment rutile TiO₂.

5. Procédé selon l'une des revendications 1 ou 2, dans lequel le composé du titane est choisi dans le groupe consistant en le chlorure de titane, l'oxychlorure de titane et leurs mélanges.

6. Procédé selon l'une des revendications 1 ou 2, dans lequel le composé du titane est l'oxychlorure de titane.

7. Procédé selon la revendication 1, dans lequel le sel catalyseur est un sel d'un métal alcalin.

8. Procédé selon la revendication 1, dans lequel le sel catalyseur est choisi dans le groupe consistant en les sels chlorures.

9. Procédé selon la revendication 7, dans lequel les sels chlorures sont choisis dans le groupe consistant en NaCl, KCl, LiCl et leurs mélanges.

10. Procédé selon la revendication 7, dans lequel les sels chlorures comprennent un mélange eutectique de NaCl, KCl et LiCl.

11. Procédé selon la revendication 7, dans lequel les sels chlorures comprennent un mélange eutectique de LiCl et KCl.

12. Procédé selon la revendication 7, dans lequel les sels chlorures comprennent un mélange eutectique de LiCl et NaCl.

13. Procédé selon l'une des revendications 1 ou 2, dans lequel le sel catalyseur est présent dans la solution d'alimentation dans une quantité entre environ 3 % en poids de la quantité équivalente de TiO₂ présent dans la solution d'alimentation et la quantité correspondant au point de saturation du sel catalyseur dans la solution d'alimentation.

14. Procédé selon l'une des revendications 1 ou 2, dans lequel le sel catalyseur présent dans la solution d'alimentation est entre environ 10 % en poids et environ 50 % en poids de la quantité équivalente de TiO₂ présent dans la solution d'alimentation.

15. Procédé selon l'une des revendications 1 ou 2, dans lequel la quantité du sel catalyseur est entre environ 15 % en poids et environ 30 % en poids de la quantité équivalente de TiO₂ présent dans la solution d'alimentation.

16. Procédé selon l'une des revendications 1 ou 2, dans lequel le sel catalyseur ne réagit pas chimiquement de façon significative avec l'oxyde de titane à travers le procédé.

17. Procédé selon l'une des revendications 1 ou 2, dans lequel le sel catalyseur ne change pas de façon significative de composition chimique.

18. Procédé selon l'une des revendications 1 ou 2, dans lequel le sel catalyseur est recyclé.

19. Procédé selon l'une des revendications 1 ou 2, dans lequel la base pigmentaire de rutile TiO₂ comprend un réseau ouvert de cristaux de rutile.

20. Procédé selon la revendication 2, dans lequel le sel catalyseur a un point de fusion inférieur à 800°C.

21. Procédé selon la revendication 2, dans lequel la calcination est conduite à une température inférieure à 800°C.

22. Procédé selon la revendication 2, dans lequel la calcination est conduite à une température inférieure à 700°C.

23. Procédé selon la revendication 2, dans lequel la calcination est conduite à une température inférieure à 600°C.

24. Procédé selon la revendication 2, dans lequel la calcination est conduite à une température inférieure à 500°C.

25. Procédé selon la revendication 2, dans lequel la calcination est conduite à une température inférieure à 400°C.

26. Procédé selon l'une des revendications 1 ou 2, dans lequel le temps de calcination est inférieur à environ deux heures.

27. Procédé selon l'une des revendications 1 ou 2, dans lequel le temps de calcination est inférieur à environ 30 minutes.

28. Procédé selon l'une des revendications 1 ou 2, dans lequel le temps de calcination est inférieur à environ une minute.

29. Procédé selon l'une des revendications 1 ou 2, dans lequel l'agent de contrôle chimique est ajouté avant l'évaporation.

30. Procédé selon la revendication 29, dans lequel l'agent de contrôle chimique est un sel d'étain soluble dans l'eau.

31. Procédé selon la revendication 29, dans lequel l'agent de contrôle chimique est le chlorure d'étain.

32. Procédé selon l'une des revendications 1 ou 2, dans lequel l'évaporation est conduite dans un séchoir-atomiseur.

33. Procédé selon l'une des revendications 1 ou 2, dans lequel la température d'évaporation est entre environ 100°C et environ 300°C.

34. Procédé selon l'une des revendications 1 ou 2, dans lequel l'intermédiaire amorphe comprend un mélange homogène de composés du titane, de l'oxygène, du chlore et de l'hydrogène, ayant une distribution homogène de sels à travers l'intermédiaire de titane.

35. Procédé selon la revendication 34, dans lequel le produit après calcination comprend des cristallites de rutile TiO₂ liés dans une structure de sphères creuses ou de parties de sphères.

36. Procédé selon la revendication 35, dans lequel les sphères ont un diamètre d'environ 0,1 à environ 100 µm.

37. Procédé selon la revendication 35, dans lequel les cristallites ont une dimension de particule entre environ 10 nm et 1 000 nm.

38. Procédé selon la revendication 35, dans lequel les cristallites ont une dimension de particule entre environ 50 nm et 500 nm.

39. Procédé selon la revendication 35, dans lequel les cristallites formant les sphères creuses ont une dimension de particule entre environ 100 nm et 300 nm.

40. Procédé selon l'une des revendications 1 ou 2, dans lequel le lavage est conduit avec de l'eau pour fournir une solution aqueuse de sel et la base pigmentaire de rutile TiO₂.

41. Procédé selon la revendication 40, comprenant en outre le recyclage des sels dans la solution aqueuse de sel.

42. Procédé selon la revendication 41, comprenant en outre le broyage du produit de base de pigmentaire rutile TiO₂.

43. Procédé selon l'une des revendications 1 ou 2, dans lequel une phase brookite thermodynamiquement instable est formée en tant qu'intermédiaire durant les stades précoces de calcination.
